# EUROPÄISCHE PATENTSCHRIFT

(11) **EP 2 836 389 B1**
(45) Veröffentlichungstag und Bekanntmachung des Hinweises auf die Patenterteilung: **17.07.2019**
(21) Anmeldenummer: 13727796.8
(22) Anmeldetag: 09.04.2013
(51) Int. Cl.: B60L 50/50

(54) **VERFAHREN ZUM BETREIBEN EINER LADEANSCHLUSSVORRICHTUNG FÜR ELEKTROFAHRZEUGE**
METHOD FOR OPERATING A CHARGING CONNECTION DEVICE FOR ELECTRIC VEHICLES
PROCÉDÉ POUR FAIRE FONCTIONNER UN DISPOSITIF DE RACCORDEMENT DE PRISE DE CHARGE DE VÉHICULE ÉLECTRIQUE

(30) Priorität: 13.04.2012 DE 102012103213
(43) Veröffentlichungstag der Anmeldung: 18.02.2015
(73) Patentinhaber: KEBA AG, 4041 Linz (AT)
(72) Erfinder: WEIDINGER, Gerhard, A-4614 Marchtrenk (AT)
(74) Vertreter: Burger, Hannes
(86) Internationale Anmeldenummer: PCT/AT2013/050082
(87) Internationale Veröffentlichungsnummer: WO 2013/152377

(56) Entgegenhaltungen:
- WO-A2-2011/127446
- US-A1- 2007 013 345
- US-A1- 2009 195 237

## Beschreibung

Die Erfindung betrifft ein Verfahren zum Betreiben einer Ladeanschlussvorrichtung für Elektrofahrzeuge, wobei die Ladeanschlussvorrichtung zumindest eine erste Schnittstelle zur Entnahme von elektrischer Energie aus einem ortsfesten Stromversorgungsnetz, zumindest eine zweite Schnittstelle zur gesteuerten Abgabe von elektrischer Energie an ein Elektrofahrzeug und ein Gehäuse umfasst. Die zweite Schnittstelle ist dabei vorzugsweise mittels einer fixen Steckbuchse am Gehäuse der Ladeanschlussvorrichtung oder mit einem flexiblen Ladekabel mit einem Stecker am freien Ende des Ladekabels ausgebildet. Das Gehäuse der Ladeanschlussvorrichtung umschließt bzw. umgrenzt eine Mehrzahl von elektrotechnischen bzw. elektronischen Komponenten, mit welchen Komponenten ein Ladevorgang des Elektrofahrzeugs gesteuert und überwacht wird, wobei mit zumindest einem Temperatursensor zumindest ein Temperaturwert im Inneren des Gehäuses fortwährend erfasst wird, sodass für den zumindest einen Temperatursensor bzw. den zumindest einen Temperaturwert eine Reihe an Temperaturmesswerten für eine Auswertung zur Verfügung steht.

Eingangs sei angemerkt, dass sich alle Temperaturangaben bzw. Temperaturwerte und Temperaturbereiche in diesem Dokument auf die °C-Temperaturskala beziehen. Dies betrifft insbesondere auch Prozentangaben zu Temperaturwerten. Ladeanschlussvorrichtungen sind prinzipiell bekannt und dienen zum zeitweisen Anschluss eines Elektrofahrzeugs an ein ortsfestes Stromversorgungsnetz, sodass die von einer Ladevorrichtung zum Laden eines Energiespeichers, insbesondere einer oder mehrerer Batterien, im Elektrofahrzeug benötigte, elektrische Energie zur Verfügung steht. Die Ladevorrichtung für den Energiespeicher ist dabei typischerweise im Elektrofahrzeug selbst integriert und ist somit in diesem Fall baulich kein Bestandteil der Ladeanschlussvorrichtung. Es sind aber auch Ausführungsformen denkbar, bei denen die Ladevorrichtung des Energiespeichers beispielsweise einen baulichen Bestandteil der Ladeanschlussvorrichtung bildet.

Bei einem Ladevorgang des Elektrofahrzeugs bzw. dessen Energiespeicher entsteht unter anderem in der Ladeanschlussvorrichtung, beispielsweise durch den Betrieb der elektrotechnischen bzw. elektronischen Komponenten im Inneren des Gehäuses der Ladeanschlussvorrichtung oder durch Leitungs- und Übergangswiderstände, welche insbesondere im Bereich von Klemmstellen, Schaltkontakten und Steckverbindungen auftreten, Wärme, welche zusammen mit der von der Umgebung eingebrachten Wärmeenergie (Umgebungsluft mit einer bestimmten Temperatur, Sonneneinstrahlung etc.), zu einer Erwärmung der Ladeanschlussvorrichtung bzw. deren Komponenten führt.

Steigt die Temperatur der Komponenten der Ladeanschlussvorrichtung über deren jeweilige maximal zulässige Betriebstemperatur, kann dies zu Funktionsstörungen oder zu permanenter Beschädigung der Komponenten und somit der Ladeanschlussvorrichtung führen. Bei einem bereits vorliegenden Defekt einer Komponente, beispielsweise einem Schaltkontakt mit hohem Übergangswiderstand oder einer losen Klemmstelle, kann dies außerdem eine gegenüber dem ungestörten Betrieb übermäßige Wärmeentwicklung verursachen, die ohne rechtzeitig eingeleitete Gegenmaßnahmen zu schweren Folgeschäden bis hin zu einem Brand führen kann.

Darüber hinaus haben Umgebungsbedingungen wie etwa direkte Sonneneinstrahlung, Umgebungslufttemperatur, Luftströmung oder etwaige benachbarte Wärmequellen erheblichen und wechselnden Einfluss auf die Wärmeabfuhr aus dem Gehäuse der Ladeanschlussvorrichtung.

Eine Worst-Case Betrachtung aller Einflüsse auf die Erwärmung mit dem Ziel, auch unter ungünstigsten Bedingungen die maximale Ladeleistung beziehungsweise den maximalen benötigten Ladestrom durch die Ladeanschlussvorrichtung bereitstellen zu können, führt zu einer für die überwiegende Anzahl der Einsatzfälle unwirtschaftlichen Überdimensionierung der Komponenten sowie des Gehäuses der Ladeanschlussvorrichtung.

Um eine unzulässige Erwärmung der Ladeanschlussvorrichtung erkennen zu können bzw. um bei Bedarf Gegenmaßnahmen einleiten zu können, wurde unter anderem vorgeschlagen, die Temperatur im Inneren des Gehäuses der Ladeanschlussvorrichtung mit zumindest einem Temperatursensor zu überwachen. Wird dabei eine überhöhte Temperatur festgestellt, so ist die übliche Reaktion darauf die, dass der Ladevorgang des Elektrofahrzeugs durch die Ladeanschlussvorrichtung abgebrochen wird. Dies hat jedoch zur Folge, dass der Energiespeicher des Elektrofahrzeuges nicht ausreichend bzw. nicht vollständig aufgeladen wird und das Elektrofahrzeug bei Bedarf nicht bzw. nur in einem eingeschränkten Umfang einsetzbar ist.

Die WO 2011/127446 A2 offenbart ein gattungsgemäßes Verfahren zum Betreiben einer Ladeanschlussvorrichtung für Elektrofahrzeuge. Dabei wird mittels einem Temperatursensor im Inneren des Gehäuses die jeweils vorliegende Temperatur fortwährend erfasst und bei Überschreitung einer vorbestimmten Grenztemperatur wird der maximal zulässige Ladestrom von einem voreingestellten Ausgangswert auf einen gegenüber diesem Ausgangswert reduzierten Wert größer Null gesetzt. Mit diesen Maßnahmen kann eine vorzeitige Unterbrechung des Ladevorganges vermieden werden. Das damit erzielbare Ladeverhalten ist jedoch nur bedingt zufriedenstellend.

Die US 2007/0013345 A1 beschreibt eine Vorrichtung und ein Verfahren zur Regulierung der Stromversorgung im Zuge eines Ladevorganges. Dabei wird mittels einem Temperatursensor die jeweils vorherrschende Temperatur in der Umgebung der entsprechenden elektrischen Last, wie z.B. einer Batterie, erfasst. In Abhängigkeit der vorherrschenden Temperaturverhältnisse in der Umgebung der elektrischen Last, insbesondere der aufzuladenden Batterie, sowie in Abhängigkeit einer vorbestimmten Zeitspanne wird dabei die Ladestromstärke zwischen einem ersten Stromwert und einem zweiten Stromwert umgeschaltet bzw. verändert.

Die US 2009/0195237 A1 beschreibt eine Vorrichtung zur regulierten elektrischen Energieversorgung einer elektrischen Last, wie z.B. eines Elektrofahrzeuges. Dabei wird mittels einem Temperatursensor die Temperatur an den Stromkontakten einer elektrischen Steckverbindung zwischen einem Stromversorgungsnetz und einem Ladekabel überwacht. Im Falle einer Überschreitung eines vorbestimmten Temperaturschwellwertes wird die über das entsprechende Ladekabel übertragene elektrische Leistung reduziert oder abgeschaltet. Damit sollen thermische Überhitzungen und potentielle Brände, insbesondere aufgrund schlechter bzw. hochohmiger Steckkontakte, vermieden werden.

Es ist daher eine Aufgabe der Erfindung, ein verbessertes Verfahren zum Betreiben einer Ladeanschlussvorrichtung für Elektrofahrzeuge zu schaffen, womit eine erhöhte Verfügbarkeit bzw. verbesserte Ausfallsicherheit der Ladeanschlussvorrichtung erreicht wird und wobei gleichzeitig die Betriebssicherheit der Ladeanschlussvorrichtung sichergestellt ist sowie wirtschaftliche Herstellungskosten erzielt werden.

Diese Aufgabe wird mit einem Verfahren entsprechend Anspruch 1 gelöst. Bei einer Überschreitung einer ersten, unteren Grenztemperatur des zumindest einen, fortwährend erfassten Temperaturwerts der maximal zulässige Ladestrom von einem vorbestehenden Ausgangswert auf einen bestimmten und gegenüber dem Ausgangswert reduzierten Wert größer null gesetzt wird und dass erst nach Ablauf einer festgelegten ersten Zeitspanne mit einer ununterbrochenen Überschreitung der ersten, unteren Grenztemperatur oder erst bei einer Überschreitung einer gegenüber der ersten Grenztemperatur beispielsweise um 3 °C erhöhten, zweiten Grenztemperatur des zumindest einen, fortwährend erfassten Temperaturwerts der Ladevorgang abgebrochen wird.

An dieser Stelle sei angemerkt, dass, soweit explizit nichts anderes festgelegt ist, auch eine Reduktion des maximal zulässigen Ladestroms auf 0 A möglich ist, und dass dies vom Effekt her gleichbedeutend ist wie ein Abbruch des Ladevorgangs, bzw. dass ein Abbruch des Ladevorgangs vom Effekt her gleichbedeutend ist mit einer Reduktion des maximal zulässigen Ladestroms auf 0 A.

Auf diese Weise ist ein Verfahren zum Betreiben einer Ladeanschlussvorrichtung für Elektrofahrzeuge geschaffen, bei dem der Ladevorgang bzw. die Zufuhr von elektrischer Energie in den Energiespeicher des Elektrofahrzeugs möglichst lange aufrecht erhalten wird, um möglichst zuverlässig ein ausreichend bzw. fertig geladenes Elektrofahrzeug zu erreichen. Gleichzeitig wird, unabhängig von der aktuellen Umgebungstemperatur bzw. von weiteren Umgebungsbedingungen, eine unzulässig hohe Erwärmung insbesondere im Inneren des Gehäuses der Ladeanschlussvorrichtung verhindert, da bei einer zu hohen oder zu langen Überschreitung der ersten Grenztemperatur des zumindest einen Temperaturwerts der Ladevorgang abgebrochen wird.

Darüber hinaus ist mit jeder Reduktion des maximal zulässigen Ladestroms jeweils der Beginn einer zweiten Zeitspanne festgelegt und wird bei Ablauf der zweiten Zeitspanne festgestellt, ob eine Überschreitung der ersten Grenztemperatur vorliegt, und wird beim Vorliegen einer solchen Überschreitung der maximal zulässige Ladestrom weiter, potentiell bis auf 0 A, reduziert. Auf diese Weise wird eine weitere Erhöhung der Verfügbarkeit bzw. Ausfallsicherheit der Ladeanschlussvorrichtung und damit eine weitere Erhöhung der Wahrscheinlichkeit erreicht, dass der Energiespeicher des Elektrofahrzeugs vollständig aufgeladen wird. Dies gilt insbesondere bei sehr hohen Umgebungstemperaturen und bei einer direkten Sonneneinstrahlung auf die Ladeanschlussvorrichtung. Günstig wirkt sich dabei aus, dass ein Großteil der in der Ladeanschlussvorrichtung entstehenden Verlustleistung beziehungsweise der Verlustwärme zufolge des Ladestroms entsteht und als ohmsche Verlustleistung proportional zum Quadrat des Ladestromes zu- bzw. abnimmt. Andererseits ist die in das Fahrzeug übertragene Leistung beziehungsweise Energiemenge pro Zeiteinheit proportional zum Ladestrom. Das bedeutet, dass bei einer Verringerung des Ladestroms um den Faktor 0.707 die anfallende Verlustleistung bereits halbiert wird (0.707² = 0.5), während sich die Ladezeit lediglich um ca. 40% verlängert (1/0.707 = 1.414). Durch eine vergleichsweise moderate Verringerung des Ladestroms kann so die anfallende Verlustleistung bereits ganz erheblich reduziert werden, wobei sich die gesamte Ladedauer im Verhältnis nur wenig verlängert.

Vorteilhafte Ausgestaltungen und Weiterbildungen der Erfindung ergeben sich aus den Unteransprüchen.

Besonders vorteilhaft ist es dabei, wenn eine Reduktion des maximal zulässigen Ladestroms oder ein Abbruch des Ladevorgangs wieder rückgängig gemacht wird, sobald die jeweilige Grenztemperatur, deren Überschreitung diese Reduktion oder diesen Abbruch ausgelöst hatte, um einen bestimmten Toleranzwert von beispielsweise 1 °C oder eine festgelegte dritte Zeitspanne lang unterschritten wird. Auf diese Weise ist eine möglichst schnelle und zuverlässige Ladung des Energiespeichers des Elektrofahrzeugs, insbesondere bei stark schwankenden Umgebungstemperaturen bzw. Umgebungsbedingungen, sichergestellt, wobei auch weiterhin die Betriebssicherheit gewährleistet bleibt. Ebenso wird durch den Toleranzwert bzw. die dritte Zeitspanne eine Oszillation der Ladeanschlussvorrichtung zwischen zwei maximal zulässigen Ladestromwerten bzw. zwischen aktiviertem Ladevorgang und abgebrochenem Ladevorgang vermieden, welche sonst beispielsweise durch eine ungenaue oder verrauschte Temperaturmessung verursacht werden kann.

Vorteilhaft ist es in diesem Zusammenhang auch, wenn nach einer Überschreitung einer dritten Grenztemperatur des zumindest einen Temperaturwerts, welche dritte Grenztemperatur erheblich, insbesondere um zumindest 20 °C, über der ersten Grenztemperatur sowie über der gegebenenfalls zweiten Grenztemperatur liegt, erst eine bewusste Bedienhandlung, insbesondere eine Fehlerquittierung, durch eine Bedienperson der Ladeanschlussvorrichtung vorgenommen werden muss, bevor der Abbruch des Ladevorgangs gegebenenfalls wieder rückgängig gemacht wird. Auf diese Weise wird die Betriebssicherheit der Ladeanschlussvorrichtung erhöht, da bei einer zu großen Überschreitung der zweiten Grenztemperatur und dem damit einhergehenden Abbruch des Ladevorgangs von einer Funktionsstörung der Ladeanschlussvorrichtung oder von außergewöhnlich ungünstigen Betriebs- beziehungsweise Umgebungsbedingungen ausgegangen werden muss und daher eine automatische Wiederaufnahme des Ladevorgangs unterbunden werden muss. Durch die bewusste Bedienhandlung ist die Bedienperson angehalten, das Grundproblem zu ermitteln und eine Behebung dessen durchzuführen bzw. zu veranlassen.

Günstig ist es, wenn der jeweilige neue, maximal zulässige Ladestrom an eine Ladevorrichtung des Elektrofahrzeugs kommuniziert wird und die Ladevorrichtung den Ladevorgang entsprechend diesem neuen, maximal zulässigen Ladestrom regelt oder begrenzt. Diese Vorgangsweise verursacht einen relativ geringen Zusatzaufwand, da die Ladevorrichtung bzw. Ladeelektronik zum Laden des Energiespeichers im Elektrofahrzeug üblicherweise ohnehin schon vorhanden ist.

Günstig ist es auch, wenn der zumindest eine Temperatursensor den zumindest einen Temperaturwert im Inneren des Gehäuses im Bereich einer Leiterplatte fortwährend erfasst, welche Leiterplatte zumindest einen Großteil der elektrotechnischen bzw. elektronischen Komponenten der Ladeanschlussvorrichtung trägt, und wobei der zumindest eine Temperatursensor bevorzugt neben einer Zentralsteuereinheit der Ladeanschlussvorrichtung positioniert ist, welche Zentralsteuereinheit die anderen elektrotechnischen bzw. elektronischen Komponenten steuert bzw. mit diesen kommuniziert. Auf diese Weise sind die bezüglich einer Temperaturüberschreitung am sensibelsten elektrotechnischen bzw. elektronischen Komponenten, insbesondere die Halbleiterbauelemente wie beispielsweise die Zentralsteuereinheit (Microcontroller), am besten gegen Überhitzung geschützt, da die Temperatur unmittelbar neben oder an diesen Komponenten fortwährend erfasst wird.

Günstig ist es zudem, wenn eine Reduktion des maximal zulässigen Ladestroms oder ein Abbruch des Ladevorgangs an eine Bedienperson der Ladeanschlussvorrichtung auf akustischem, visuellem und/oder informationstechnischem, d.h. beispielsweise durch deine Mobilfunk-Kurznachricht (SMS) oder eine E-Mail, Weg signalisiert wird. Auf diese Weise ist eine zeitnahe und umfassende Information der Bedienperson sichergestellt, sodass diese sich zumindest auf die aktuelle Situation wie beispielsweise eine längere Ladezeit des Elektrofahrzeugs einstellen kann oder sogar Gegenmaßnahmen einleiten kann.

Vorteilhaft ist es, wenn die jeweilige Grenztemperatur des zumindest einen Temperaturwerts mittels einer oder mehrerer Referenzmessungen derart ermittelt wird, dass unterhalb der jeweiligen Grenztemperatur die zulässigen maximalen Betriebstemperaturen ausgewählter elektrotechnischer und elektronischer Komponenten der Ladeanschlussvorrichtung nicht überschritten werden. Dabei wird die typische Temperaturverteilung innerhalb des Gehäuses und die typische Temperatur von ausgewählten Komponenten im Verhältnis zu dem zumindest einen Temperaturwert bestimmt und von den höchstens zulässigen Betriebstemperaturen dieser Komponenten auf die Grenztemperatur für den zumindest einen Temperaturwert rückgeschlossen. Auf diese Weise ist eine möglichst passende Festlegung der jeweiligen Grenztemperatur sichergestellt, sodass einerseits eine möglichst hohe Verfügbarkeit bzw. Ausfallsicherheit gegeben ist und andererseits die Betriebssicherheit zu jedem Zeitpunkt gewährleistet ist. Ebenso wird durch die punktgenaue Festlegung der Grenztemperaturen auf diese Art und Weise eine möglichst lange Lebensdauer der elektrotechnischen bzw. elektronischen Komponenten erreicht.

Vorteilhaft ist es auch, wenn der mit dem zumindest einen Temperatursensor fortwährend erfasste, zumindest eine Temperaturwert einer Trendanalyse unterzogen wird, sodass eine frühzeitige Reduktion des maximal zulässigen Ladestroms bzw. ein frühzeitiger Abbruch des Ladevorgangs bei einem entsprechenden Ergebnis der Trendanalyse durchgeführt werden kann, und wenn eine Reduktion des maximal zulässigen Ladestroms bzw. ein Abbruch des Ladevorgangs bei einem entsprechenden Ergebnis der Trendanalyse unterbunden oder frühzeitig rückgängig gemacht werden kann. Auf diese Weise wird die Verfügbarkeit bzw. Ausfallsicherheit, die Effektivität des Ladevorgangs und die Betriebssicherheit der Ladeanschlussvorrichtung weiter erhöht, da die Maßnahmen bzw. Gegenmaßnahmen
bei einer drohenden Übertemperatur frühzeitig eingeleitet werden und bei einer nicht wirklich kritischen bzw. einer bald nicht mehr gegebenen Übertemperatur erst gar nicht eingeleitet bzw. frühzeitig rückgängig gemacht werden.

Vorteilhaft ist es weiters, wenn entsprechend dem aktuellen oder gegebenenfalls in einer Trendanalyse vorhergesagten Ausmaß der Änderungsrate, d.h. der Geschwindigkeit des Temperaturanstiegs bzw. der Temperaturabsenkung, des zumindest einen Temperaturwerts im Bereich der ersten Grenztemperatur das Ausmaß der Reduktion bzw. gegebenenfalls der Erhöhung des maximal zulässigen Ladestroms ermittelt und festgelegt wird. Dabei fällt die Reduktion umso stärker aus, je höher die Anstiegsrate des zumindest einen Temperaturwerts (vorhergesagt) ist bzw. fällt die Erhöhung umso stärker aus, je höher die Absinkrate des zumindest einen Temperaturwerts (vorhergesagt) ist. Bei dieser Maßnahme wird also genau abgeleitet, um wieviel die in der Ladeanschlussvorrichtung entstehende Verlustleistung über der nach Außen abgegebenen Wärmemenge liegt und um wieviel daher der Ladestrom reduziert werden muss, um einen ausgeglichenen und möglichst stationären Betrieb in der Nähe der Grenztemperatur zu erreichen. Auf diese Weise ist ein besonders effizienter und sicherer Betrieb der Ladeanschlussvorrichtung sichergestellt.

Vorteilhaft ist es ebenso, wenn bei einer Reduktion des maximal zulässigen Ladestroms, bei einem Abbruch des Ladevorgangs und/oder gegebenenfalls bei einem entsprechenden Ergebnis der Trendanalyse des zumindest einen Temperaturwerts, d.h. wenn eine Überschreitung der jeweiligen Grenztemperatur wahrscheinlich ist, eine Lüftungseinheit der Ladeanschlussvorrichtung aktiviert wird. Auf diese Weise wird, insbesondere in Verbindung mit einer Trendanalyse, eine weitere Erhöhung der Verfügbarkeit bzw. Ausfallsicherheit und Betriebssicherheit der Ladeanschlussvorrichtung erreicht, da die elektrotechnischen bzw. elektronischen Komponenten von der Lüftungseinheit (frühzeitig) aktiv gekühlt werden. Darüber hinaus wird durch die nur bedarfsweise Zwangskühlung die Geräuschentwicklung niedrig gehalten sowie die Lebensdauer der Lüftungseinheit entscheidend verlängert.

Besonders günstig ist es, wenn mit zumindest einem weiteren Temperatursensor zumindest ein weiterer Temperaturwert an oder in der zumindest einen, zweiten Schnittstelle der Ladeanschlussvorrichtung fortwährend erfasst wird und dieser zumindest eine weitere Temperaturwert bezüglich einer Überschreitung zumindest einer weiteren Grenztemperatur überwacht wird. Auf diese Weise wird ein neuralgischer Bereich der Ladenanschlussvorrichtung unmittelbar in die Temperaturüberwachung einbezogen, sodass die Verfügbarkeit bzw. Ausfallsicherheit und Betriebssicherheit erhöht wird. Besonders der Bereich der zumindest einen, zweiten Schnittstelle zur gesteuerten Abgabe von elektrischer Energie an das Elektrofahrzeug, welche Schnittstelle insbesondere eine Steckbuchse am Gehäuse der Ladeanschlussvorrichtung oder ein flexibles Ladekabel mit einem Stecker an dessen freiem Ende für die entsprechende Steckbuchse am Elektrofahrzeug umfasst, ist eine Wärmeentwicklung aufgrund von Übergangswiderständen zwischen den Kontakten der Steckbuchse und des korrespondierenden Steckers möglich. Diese Situation verschärft sich zudem mit zunehmendem Alter bzw. mit steigendem Abnützungsgrad einer solchen Steckverbindung.

Vorteilhaft ist es, wenn mit mehreren Temperatursensoren mehrere Temperaturwerte, bevorzugt an unterschiedlichen Messpositionen, im Inneren des Gehäuses fortwährend erfasst werden. Auf diese Weise je nach Anzahl und Verteilung der Temperatursensoren eine möglichst umfassende und lückenlose Temperaturüberwachung der Ladeanschlussvorrichtung sichergestellt.

Vorteilhaft ist es auch, wenn mit einem weiteren Temperatursensor ein weiterer Temperaturwert an bzw. in einem Netzteil fortwährend erfasst wird, welches Netzteil zumindest den Großteil der elektrotechnischen bzw. elektronischen Komponenten der Ladeanschlussvorrichtung mit elektrischer Energie versorgt, und wobei bei einer Überschreitung einer weiteren Grenztemperatur dieses weiteren Temperaturwerts der Ladevorgang beendet und die Ladeanschlussvorrichtung durch Abschalten des Netzteils stillgelegt wird. Auf diese Weise wird in einem Störungsfall eine Reduktion der Wärmeentwicklung in der Ladeanschlussvorrichtung selbst auf ein Minimum erreicht, sodass in einem solchen Störungsfall eine möglichst niedrige Temperatur im Inneren des Gehäuses der Ladeanschlussvorrichtung auftritt. Dadurch wird die Betriebssicherheit der Ladeanschlussvorrichtung erhöht. Ebenso wird auf diese Weise die Betriebssicherheit auch dadurch erhöht, dass eine funktional unabhängige, d.h. eigenständig wirksame Temperaturüberwachung, eine sichere Abschaltung herbeiführen kann, welche unabhängige Temperaturüberwachung auch bei fehlerhafter Funktion der insbesondere software- bzw. prozessorgesteuerten, normalen Temperaturüberwachung funktioniert. Vorteilhaft ist es schließlich, wenn jede Überschreitung und/oder jede darauffolgende Unterschreitung einer Grenztemperatur, bevorzugt zusammen mit anderen Betriebsereignissen und insbesondere mit einem absoluten oder relativen Zeitstempel versehen, protokolliert wird. Auf diese Weise kann eine eingehende und umfassende Funktionskontrolle und Funktionsoptimierung der Ladeanschlussvorrichtung im Normalbetrieb und eine Diagnose der Ladeanschlussvorrichtung in den Störfällen, insbesondere bei den Überschreitungen der jeweiligen Grenztemperatur, durchgeführt werden.

Zum besseren Verständnis der Ausführungsformen werden diese anhand der nachfolgenden Figuren näher erläutert.

Es zeigen jeweils in stark vereinfachter, schematischer Darstellung:
- Fig. 1: eine Ausführungsform der Ladeanschlussvorrichtung in perspektivischer Ansicht auf die Gehäusevorderseite;
- Fig. 2: die Ladeanschlussvorrichtung gemäß Fig. 1 in Explosionsdarstellung;
- Fig. 3: die Ladeanschlussvorrichtung gemäß Fig. 1 in geöffneter und längsgeschnittener Darstellung;
- Fig. 4: beispielhafte Temperaturverläufe über der Zeit mit einer Darstellung der gemäß einer ersten Gruppe von Ausführungsformen der Ladeanschlussvorrichtung aus Fig. 1 durchgeführten Verfahrensschritte;
- Fig. 5: weitere beispielhafte Temperaturverläufe über der Zeit mit einer Darstellung der gemäß einer weiteren Ausführungsform der Ladeanschlussvorrichtung aus Fig. 1 durchgeführten Verfahrensschritte und
- Fig. 6: weitere beispielhafte Temperaturverläufe über der Zeit mit einer Darstellung der gemäß einer weiteren Gruppe von Ausführungsformen der Ladeanschlussvorrichtung aus Fig. 1 durchgeführten Verfahrensschritte.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

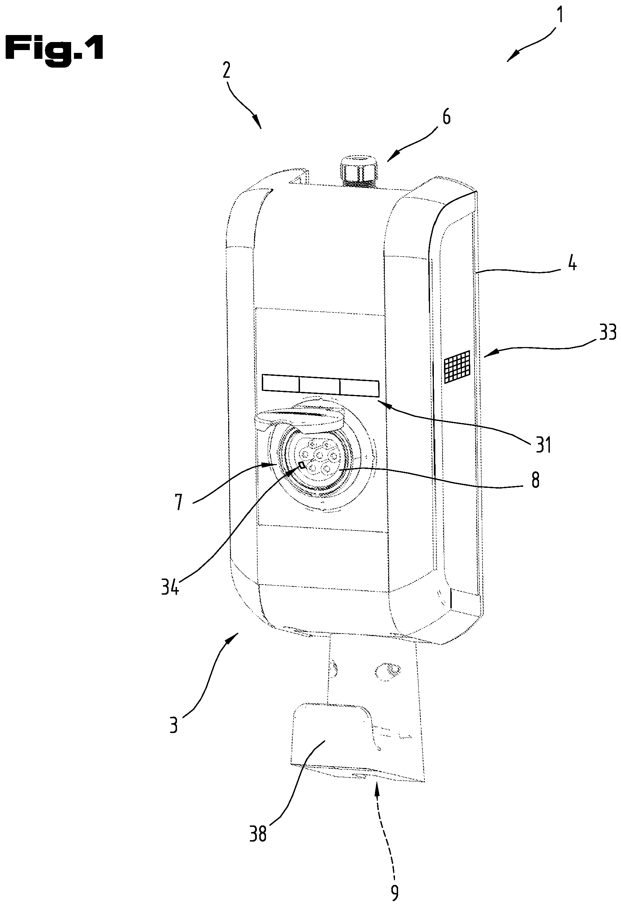

In den Fig. 1 bis 3 ist eine beispielhafte Ausführungsform einer Ladeanschlussvorrichtung 1 für Elektrofahrzeuge veranschaulicht. Diese Ladeanschlussvorrichtung 1 ist zum Aufladen bzw. Regenerieren eines Energiespeichers, insbesondere einer oder mehrerer Batterien, eines Elektrofahrzeuges vorgesehen, wobei die Ladeanschlussvorrichtung 1 das Bindeglied zwischen einem ortsfesten Stromversorgungsnetz und einer Ladevorrichtung bzw. des Energiespeichers des Elektrofahrzeugs bildet. Die Ladevorrichtung des Energiespeichers kann dabei als Bestandteil der Ladeanschlussvorrichtung 1 ausgebildet sein, in den derzeit üblichen Ausführungsformen ist die Ladevorrichtung jedoch vorzugsweise im Elektrofahrzeug selbst eingebaut. Die Ladeanschlussvorrichtung 1 stellt dann eine Art intelligente Stromtankstelle für Elektrofahrzeuge dar.

Die gezeigte Ladeanschlussvorrichtung 1 umfasst ein Gehäuse 2, welches seinerseits aus einem vorderen Gehäuseteil 3 und einem hinteren Gehäuseteil 4 gebildet ist, wobei der hintere Gehäuseteil 4 ortsfest, beispielsweise an einer Hauswand oder einer Säule, montiert ist und der vordere Gehäuseteil 3 bedarfsweise von dem hinteren Gehäuseteil 4 abgenommen werden kann. Im vorliegenden Ausführungsbeispiel ist der vordere Gehäuseteil 3 aus mehreren, weiteren Gehäuseteilen 5 bis 5^{IV} gebildet.

An einer Oberseite des Gehäuses 2 ist eine erste Schnittstelle 6 zur Entnahme von elektrischer Energie aus dem ortsfesten Stromversorgungsnetz angeordnet. Über diese erste Schnittstelle 6 bezieht die Ladeanschlussvorrichtung 1 die elektrische Energie aus dem Stromversorgungsnetz, wobei im vorliegenden Ausführungsbeispiel die erste Schnittstelle 6 als fix verdrahtete Leitungsschnittstelle ausgeführt ist. Um die typischerweise benötigte, elektrische Leistung in die Ladeanschlussvorrichtung 1 bzw. von dort weiter zum Elektrofahrzeug übertragen zu können, sind elektrische Kabel mit einem Leitungsquerschnitt von zumindest 4 mm² vorgesehen.

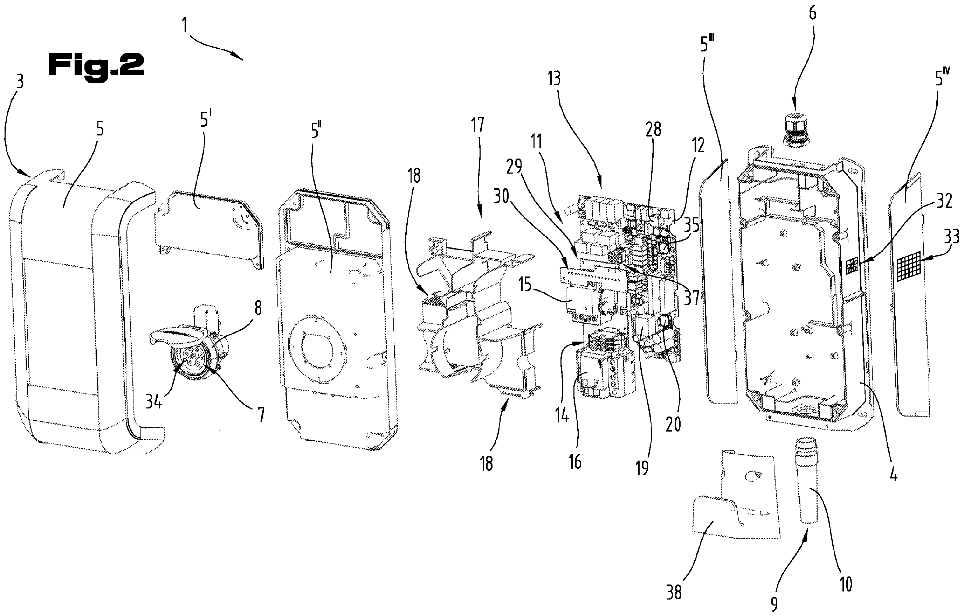

Zur Abgabe der elektrischen Energie an das Elektrofahrzeug ist an einer Vorderseite des Gehäuses 2 zumindest eine zweite Schnittstelle 7 ausgebildet. Diese zweite Schnittstelle 7 umfasst eine Steckbuchse 8, in welche ein Stecker eines Ladekabels des Elektrofahrzeugs eingeführt und verriegelt werden kann. Bei der dargestellten Ladeanschlussvorrichtung 1 ist an einer Unterseite des Gehäuses 2 eine weitere, zweite Schnittstelle 9 vorgesehen, an welcher ein fix mit der Ladeanschlussvorrichtung 1 verdrahtetes, flexibles Ladekabel angeschlossen sein kann, wobei am freien Ende des flexiblen Ladekabels ein Stecker ausgebildet ist, welcher in eine entsprechende Steckbuchse am Elektrofahrzeug eingesteckt werden kann. Ein entsprechender Ladekabelabgang 10 für das flexible Ladekabel der weiteren, zweiten Schnittstelle 9 ist in Fig. 2 ersichtlich. Welche der Ausführungsformen der zweiten Schnittstelle 7, 9 nun tatsächlich an der Ladeanschlussvorrichtung vorhanden ist und ob eine oder mehrere zweite Schnittstellen 7, 9 ausgebildet sind kann nach Bedarf festgelegt werden. Bei einer Ausführung der zumindest einen, zweiten Schnittstelle 7, 9 als flexibles Ladekabel ist zweckmäßiger weise eine Ladekabelhalterung 38 vorgesehen, auf welcher das flexible Ladekabel bei Nichtgebrauch verstaut werden kann.

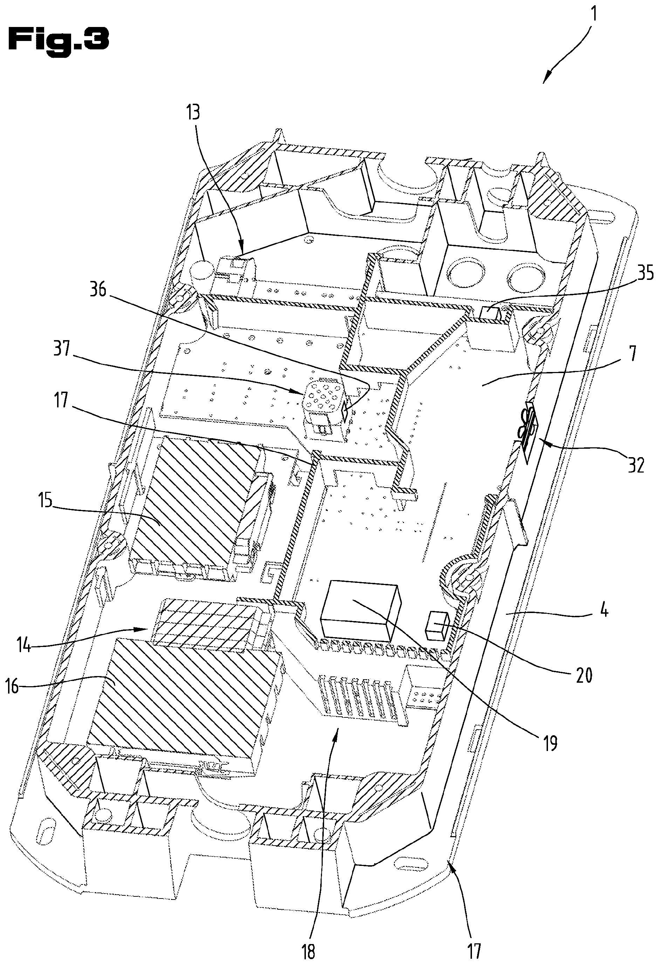

Wie am besten in den Fig. 2 und 3 ersichtlich ist, umschließt das Gehäuse 2 bzw. der vordere Gehäuseteil 3 und der hintere Gehäuseteil 4 eine Mehrzahl von elektrotechnischen bzw. elektronischen Komponenten im Inneren des Gehäuses 2, welche elektrotechnischen bzw. elektronischen Komponenten 11 auf einer Leiterplatte 12 angeordnet bzw. fixiert sind und unter anderem den Ladevorgang des Elektrofahrzeuges steuern und überwachen. Im Zuge der Steuerung bzw. Überwachung des Ladevorgangs ist es ebenso nötig, verschiedene Messungen, beispielsweise zur Bestimmung der Stromstärke des an das Elektrofahrzeug übertragenen Stromes, vorzunehmen. Die dazu nötigen, elektrotechnischen bzw. elektronischen Komponenten 11 sind ebenso auf der Leiterplatte 12 vorhanden.

Die elektrotechnischen bzw. elektronischen Komponenten 11 umfassen weiters insbesondere Anschlussklemmen 6 zum Verbinden der Leitungen der ersten Schnittstelle 6 mit der Ladeanschlussvorrichtung 1, Anschlussklemmen 14 zum Verbinden der Leitungen der zweiten Schnittstelle 7 bzw. der weiteren zweiten Schnittstelle 9 mit der Ladeanschlussvorrichtung 1, einen Schütz 15 zum Herstellen bzw. Trennen der elektrischen Verbindung zwischen der ersten Schnittstelle 6 und der zweiten Schnittstelle 7 bzw. der weiteren zweiten Schnittstelle 9 der Ladeanschlussvorrichtung 1, wahlweise einen Fehlerstromschutzschalter 16, welcher bei einem Erdschluss im Stromversorgungsnetz von der Ladeanschlussvorrichtung 1 bis zum Elektrofahrzeug den Stromkreis unterbricht und eine Zentralsteuereinheit 19, welche die anderen elektrotechnischen bzw. elektronischen Komponenten 11 steuert bzw. mit diesen kommuniziert und vorzugsweise durch einen Microcontroller gebildet ist.

Die Leiterplatte 12 mit den darauf montierten, elektrotechnischen und elektronischen Komponenten 11 ist in einem Bodenbereich im Inneren des hinteren Gehäuseteils 4 fixiert. Zwischen einer Vorderseite der Leiterplatte 12 bzw. der elektrotechnischen bzw. elektronischen Komponenten 11 und dem weiteren Gehäuseteil 5^{II} des vorderen Gehäuseteils 3 des Gehäuses 2 ist ein Formteil 17 aus Kunststoff angeordnet, welcher Formteil 17 den weiteren Gehäuseteil 5^{II} gegenüber der Leiterplatte 12 bzw. dem hinteren Gehäuseteil 4 abstützt und, wie am besten in Fig. 3 ersichtlich ist, die Leiterplatte 12 und die darauf befindlichen, elektrotechnischen bzw. elektronischen Komponenten 11 in verschiedene Bereiche unterteilt bzw. einteilt. Zur Sicherstellung einer ausreichenden Luftzirkulation zur Kühlung im Inneren des Gehäuses 2 ist der Formteil 17 an verschiedenen Stellen mit Lüftungsdurchbrüchen 18 ausgestattet.

Zur Überwachung der Temperatur im Inneren des Gehäuses 2 der Ladeanschlussvorrichtung 1 ist zumindest ein Temperatursensor 20 an einer bestimmten Position im Gehäuse 2 zur fortwährenden Erfassung zumindest eines Temperaturwerts angeordnet. Im gezeigten Ausführungsbeispiel ist der zumindest eine Temperatursensor 20 im Bereich der Leiterplatte 12 neben der Zentralsteuereinheit 19 der Ladeanschlussvorrichtung 1 positioniert, sodass die aktuelle Temperatur in diesem Bereich bzw. neben diesem sensiblen Bauelement unmittelbar erfasst und überwacht werden kann.

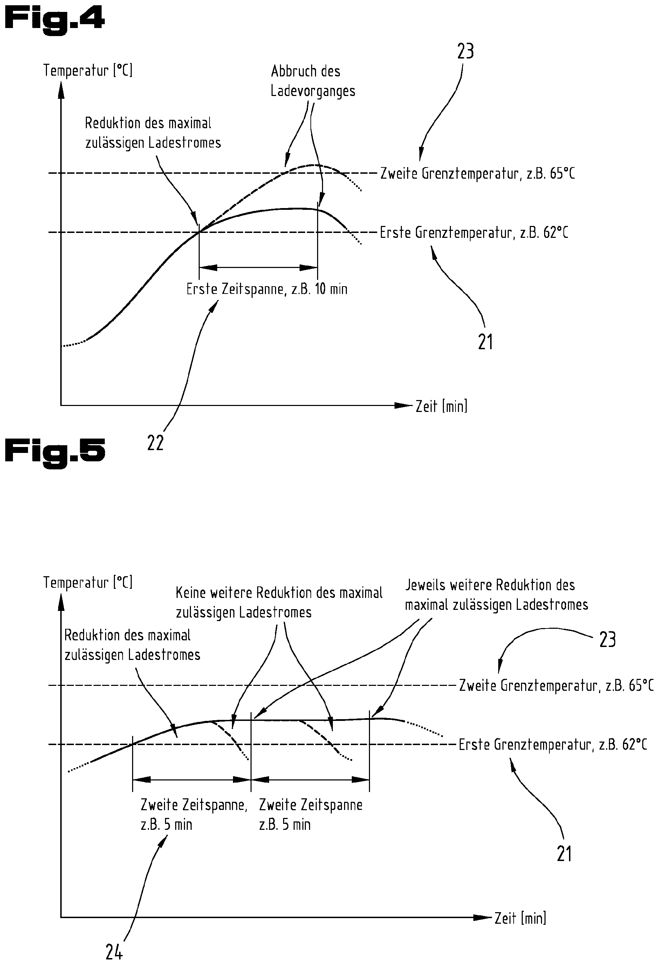

In den Fig. 4 bis 6 ist gezeigt, wie die Ladeanschlussvorrichtung 1 auf verschiedene Verläufe des von dem zumindest einen Temperatursensor 20 fortwährend erfassten, zumindest einen Temperaturwerts im Inneren des Gehäuses 2 reagiert.

Wie in Fig. 4 dargestellt, ist für den zumindest einen Temperaturwert eine erste Grenztemperatur 21 von beispielsweise 62 °C definiert. Solange der fortwährend erfasste Temperaturwert unter dieser ersten Grenztemperatur 21 liegt, wird von der Ladeanschlussvorrichtung 1 ein bestimmter, maximal zulässiger Ladestrom von beispielsweise 32 A vorgegeben. Bei einer Überschreitung der ersten Grenztemperatur 21 des zumindest einen Temperaturwerts wird der maximal zulässige Ladestrom von dem vorbestehenden Ausgangswert auf einen bestimmen und gegenüber dem Ausgangswert reduzierten Wert von beispielsweise 16 A gesetzt. Gemäß einer ersten Ausführungsform des Verfahrens ist mit dieser Reduktion des maximal zulässigen Ladestroms der Beginn einer ersten Zeitspanne 22 von beispielsweise 10 Minuten festgelegt und bei Ablauf dieser ersten Zeitspanne 22 mit einer ununterbrochenen Überschreitung der ersten Grenztemperatur 21 wird der Ladevorgang abgebrochen.

In einer zweiten, alternativen Ausführungsform oder Weiterbildung des Verfahrens ist eine zweite, gegenüber der ersten Grenztemperatur 21 erhöhte Grenztemperatur 23 des zumindest einen Temperaturwerts von beispielsweise 65 °C definiert. Wird nach einer Überschreitung der ersten Grenztemperatur 21 und einer daraus resultierenden Reduktion des maximal zulässigen Ladestroms in weiterer Folge auch die höhere, zweite Grenztemperatur 23 überschritten, so wird der Ladevorgang zu diesem Zeitpunkt abgebrochen.

Sollte die Vorgabe eines reduzierten maximal zulässigen Ladestroms keine Wirkung zeigen, da beispielsweise die Ladevorrichtung des Elektrofahrzeugs nicht auf die Reduktion des maximal zulässigen Ladestroms reagiert, so wird der Ladevorgang vorzugsweise nicht sofort abgebrochen, sondern so lange fortgesetzt, bis eine der zuvor genannten Abbruchbedingungen erfüllt ist, damit der Ladevorgang möglichst lange aufrechterhalten wird.

Gemäß einer weiteren Weiterbildung des Verfahrens, welche in Fig. 5 grafisch veranschaulicht ist, ist mit jeder Reduktion des maximal zulässigen Ladestroms jeweils der Beginn einer zweiten Zeitspanne 24 von beispielsweise 5 Minuten festgelegt. Beim jeweiligen Ablauf dieser zweiten Zeitspanne 24 wird nun festgestellt, ob eine Überschreitung der ersten Grenztemperatur 21 weiterhin vorliegt. Ist dies der Fall, so wird der maximal zulässige Ladestrom weiter reduziert, beispielsweise auf 10 A. Ist andererseits nach Ablauf der zweiten Zeitspanne 24 eine Überschreitung der ersten Grenztemperatur 21 nicht mehr gegeben, so wird keine weitere Reduktion des maximal zulässigen Ladestroms durchgeführt.

In diesem Zusammenhang sei angemerkt, dass eine weitere Reduktion des maximal zulässigen Ladestroms auch den Fall mitumfasst, bei welchem der maximal zulässige Ladestrom auf 0 A reduziert wird. Auch sei angemerkt, dass die in Fig. 5 dargestellte Weiterbildung des Verfahrens unabhängig von der in Fig. 4 beschriebenen Ausführungsform des Verfahrens durchgeführt wird. Ein Abbruch des Ladevorgangs wird also weiterhin beispielsweise durch ein Überschreiten der zweiten Grenztemperatur 23 des zumindest einen Temperaturwerts ausgelöst.

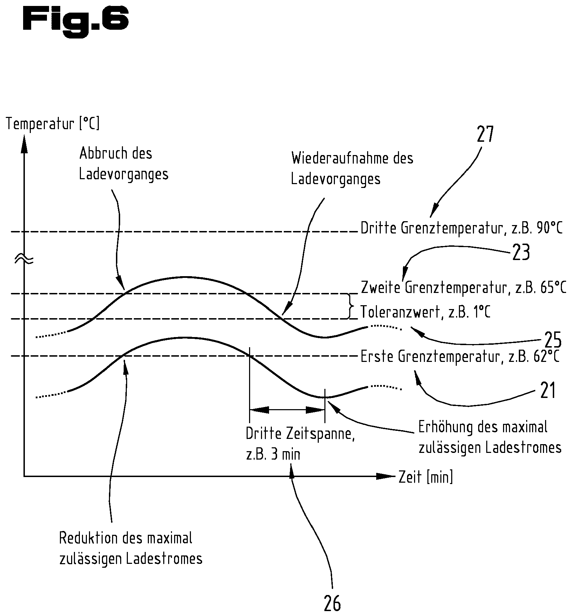

In Fig. 6 ist eine weitere Ausführungsform des Verfahrens grafisch veranschaulicht, bei dem eine Reduktion des maximal zulässigen Ladestroms oder ein Abbruch des Ladevorgangs wieder rückgängig gemacht wird, sobald die jeweilige Grenztemperatur 21, 23, deren Überschreitung diese Reduktion oder diesen Abbruch ausgelöst hatte, um einen bestimmten Toleranzwert 25 von beispielsweise 1 °C oder eine festgelegte dritte Zeitspanne 26 von beispielsweise 3 Minuten lang unterschritten wird. Hierbei sei angemerkt, dass in Fig. 6 diese beiden Ausprägungen des Verfahrens für die beiden Grenztemperaturen 21, 23 nur beispielhaft veranschaulicht sind. Es ist natürlich ebenso möglich, dass für die jeweilige Grenztemperatur 21, 23 die jeweils andere Ausprägung des Verfahrens (Toleranzwert 25 oder dritte Zeitspanne 26) zum Einsatz kommt oder für beide Grenztemperaturen 21, 23 jeweils die gleiche Ausprägung des Verfahrens zum Einsatz kommt.

In Fig. 6 ist weiters eine dritte Grenztemperatur 27 von beispielsweise 90 °C dargestellt, wobei diese dritte Grenztemperatur 27 erheblich, insbesondere um zumindest 20 °C, über der ersten Grenztemperatur 21 sowie über der gegebenenfalls zweiten Grenztemperatur 23 liegt. Gemäß einer weiteren Ausführungsform des Verfahrens muss nach einer Überschreitung der dritten Grenztemperatur 27 des zumindest einen Temperaturwerts erst eine bewusste Bedienhandlung, insbesondere eine Fehlerquittierung, durch eine Bedienperson der Ladeanschlussvorrichtung 1 vorgenommen werden, bevor der Abbruch des Ladevorgangs gegebenenfalls, das heißt bei einer ausreichend weiten oder ausreichend langen Unterschreitung der zweiten Grenztemperatur 23, wieder rückgängig gemacht wird. Bei der durch die dritte Grenztemperatur 27 definierten, massiven Überschreitung der zweiten Grenztemperatur 23 und dem damit einhergehenden Abbruch des Ladevorgangs ist von einer Funktionsstörung der Ladeanschlussvorrichtung oder extrem ungünstigen Umgebungsbedingungen auszugehen und eine automatische Wiederaufnahme des Ladevorgangs ist daher zu unterbinden.

Zweckmäßig ist es, wenn der gemäß der eingesetzten Ausführungsform des Verfahrens jeweils neu ermittelte, das heißt reduzierte oder erhöhte, maximal zulässige Ladestrom an eine Ladevorrichtung des Elektrofahrzeugs bzw. dessen Energiespeicher kommuniziert wird und die Ladevorrichtung den Ladevorgang entsprechend diesem neuen, maximal zulässigen Ladestrom regelt oder begrenzt. Zu diesem Zweck ist die Ladeanschlussvorrichtung 1 mit einer Kommunikationsschnittstelle 28 ausgestattet, mit der unter anderem die Kommunikation zwischen der Ladeanschlussvorrichtung 1 und dem aufzuladenden Elektrofahrzeug bewerkstelligt werden. Insbesondere erfolgt diese Kommunikation leitungsgebunden über das Ladekabel, welches an der zumindest einen, zweiten Schnittstelle 7, 9 der Ladeanschlussvorrichtung 1 und am anderen Ende mit der entsprechenden Schnittstelle des Elektrofahrzeugs verbunden ist. Hierbei sind aber auch andere Kommunikationswege denkbar, wie beispielsweise eine drahtlose Kommunikation mittels eines elektromagnetischen Signals.

Weiters kann die Kommunikationsschnittstelle 28 auch eine Kommunikation der Ladeanschlussvorrichtung 1 mit weiteren Vorrichtungen wie beispielsweise einer abgesetzt bzw. externen Bedienvorrichtung für die Ladeanschlussvorrichtung 1 oder einer zentralen Verwaltungsvorrichtung für eine Mehrzahl von Ladeanschlussvorrichtungen 1 ermöglichen. Diese Kommunikation kann auch über das Internet erfolgen.

Zweckmäßigerweise ist die Ladeanschlussvorrichtung 1 auch mit einem Ausgabeelement 29 umfassend ein oder mehrere Leuchtmittel 30 ausgestattet, welches Ausgabeelement 29 zur Anzeige eines visuellen Signals in einem Anzeigeabschnitt 31 - Fig. 1 - an der Vorderseite des Gehäuses 2 der Ladeanschlussvorrichtung 1 eingesetzt wird, sodass eine Reduktion des maximal zulässigen Ladestroms oder ein Abbruch des Ladevorgangs an eine Bedienperson der Ladeanschlussvorrichtung 1 auf visuellem Weg signalisiert werden kann. In diesem Zusammenhang ist es ebenso denkbar, dass eine solche Signalisierung zusätzlich oder ausschließlich beispielsweise auf akustischem Weg über ein weiteres Ausgabeelement und/oder auf einem informationstechnischen Weg über die Kommunikationsschnittstelle 28 erfolgt. Unter einer Signalisierung auf einem informationstechnischem Weg wird beispielsweise eine Versendung einer Mobilfunk-Kurznachricht oder einer E-Mail an die Bedienperson verstanden.

Ebenso kann die Signalisierung der Reduktion des Ladestroms und des Abbruchs des Ladevorgangs beispielsweise auch an die abgesetzt bzw. externen Bedienvorrichtung für die Ladeanschlussvorrichtung 1 oder die zentralen Verwaltungsvorrichtung für eine Mehrzahl von Ladeanschlussvorrichtungen 1 erfolgen und dort visuell oder akustisch ausgegeben bzw. dargestellt werden.

Zweckmäßig ist es auch, wenn die jeweilige Grenztemperatur 21, 23, 27 des zumindest einen Temperaturwerts vorab mittels einer oder mehrerer Referenzmessungen derart ermittelt wird, dass unterhalb der jeweiligen Grenztemperatur 21, 23, 27 die zulässigen, maximalen Betriebstemperaturen ausgewählter elektrotechnischer oder elektronischer Komponenten 11 der Ladeanschlussvorrichtung 1 nicht überschritten werden. Das heißt also, dass spezifisch für die bestimmte Position bzw. Anordnung des zumindest einen Temperatursensors 20 die jeweilige Grenztemperatur 21, 23, 27 unter Berücksichtigung der zulässigen, maximalen Betriebstemperaturen ausgewählter, insbesondere sensibler, elektrotechnischer und elektronischer Komponenten 11, wie beispielsweise der Zentralsteuereinheit 19, im Zuge der zumindest einen Referenzmessungen ermittelt wird.

Besonders zweckmäßig ist es auch, wenn der mit dem zumindest einen Temperatursensor 20 fortwährend erfasste, zumindest eine Temperaturwert einer Trendanalyse unterzogen wird. Bei einer solchen Trendanalyse wird aus der aktuellen Höhe des Temperaturwerts oder aus der aktuellen Änderungsrate bzw. Änderungsrichtung des Temperaturwerts eine Abschätzung bzw. Vorhersage getroffen, wie sich der zumindest eine Temperaturwert in nächster Zeit wertmäßig entwickeln wird. Ein Ergebnis einer solchen Trendanalyse ist beispielsweise, ob bzw. mit welcher Wahrscheinlichkeit der zumindest eine Temperaturwert zu einem bestimmten Zeitpunkt in der Zukunft einen der Grenztemperaturen 21, 23, 27 über- oder unterschreiten wird, um welchen Betrag diese Über- bzw. Unterschreitung erfolgen wird und/oder wie lange eine solche Über- oder Unterschreitung andauern wird.

Mit dem Ergebnis der Trendanalyse des zumindest einen Temperaturwerts ist es dann möglich, frühzeitig eine Reduktion des maximal zulässigen Ladestroms bzw. einen frühzeitigen Abbruch des Ladevorgangs durchzuführen, wenn das Ergebnis der Trendanalyse eine Überschreitung der ersten Grenztemperatur 21 bzw. der zweiten Grenztemperatur 23 vorhersagt. Ebenso ist es möglich, eine Reduktion des maximal zulässigen Ladestroms bzw. einen Abbruch des Ladevorgangs zu unterbinden, wenn durch das Ergebnis der Trendanalyse nahegelegt ist, dass eine Überschreitung der ersten Grenztemperatur 21 bzw. der zweiten Grenztemperatur 23 nur für eine bestimmte, ausreichend kurze Zeitspanne und/oder um einen ausreichend geringen Betrag erfolgen wird. Auch ist es möglich, eine Reduktion des maximal zulässigen Ladestroms bzw. einen Abbruch des Ladevorgangs bei einem entsprechenden Ergebnis der Trendanalyse frühzeitig rückgängig zu machen.

Ebenso ist es zweckmäßig, insbesondere im Zusammenspiel mit einer Trendanalyse, entsprechend dem aktuellen oder gegebenenfalls vorhergesagten Ausmaß der Änderungsrate, d.h. der Geschwindigkeit des Temperaturanstiegs bzw. der Temperaturabsenkung, des zumindest einen Temperaturwerts im Bereich der ersten Grenztemperatur 21 das Ausmaß der Reduktion bzw. gegebenenfalls der Erhöhung des maximal zulässigen Ladestroms zu ermitteln und festzulegen. Die Änderungsgeschwindigkeit der Temperatur in der Nähe des ersten Grenzwerts bietet einen Anhaltspunkt für das notwendige bzw. zweckmäßige Ausmaß der Änderung des Ladestroms, um einen möglichst stationären Betrieb in der Nähe der Grenztemperatur bei optimalem Ladestrom zu erzielen.

Wie den Fig. 1 bis 3 entnommen werden kann, ist die Ladeanschlussvorrichtung 1 mit einer Lüftungseinheit 32 mit einem außen vorgelagertem Lüftungsgitter 33 im weiteren Gehäuseteil 5^{III} des vorderen Gehäuseteils 3 des Gehäuses 2 ausgestattet. Diese Lüftungseinheit 32 kann bei einer Reduktion des maximal zulässigen Ladestroms, bei einem Abbruch des Ladevorgangs und/oder gegebenenfalls bei einem entsprechenden Ergebnis der Trendanalyse des zumindest einen Temperaturwerts, d.h. wenn eine Überschreitung der jeweiligen Grenztemperatur 21, 23, 27 wahrscheinlich ist, aktiviert werden, um einen kühlenden Luftstrom im Inneren des Gehäuses 2, insbesondere im Bereich der Leiterplatte 12 zur Kühlung der elektrotechnischen bzw. elektronischen Komponenten 11 zu erzeugen und die im Inneren des Gehäuses 2 anfallende Wärmeenergie nach außen abzuführen.

In der beschriebenen Ausführungsform der Ladeanschlussvorrichtung 1 ist die Steckbuchse 8 der zumindest einen, zweiten Schnittstelle 7 der Ladeanschlussvorrichtung 1 mit zumindest einem weiteren Temperatursensor 34 ausgestattet, mit welchem weiteren Temperatursensor 34 zumindest ein weiterer Temperaturwert fortwährend erfasst wird. Dieser zumindest eine weitere Temperaturwert wird in gleicher Form wie zuvor für den zumindest einen Temperaturwert des zumindest einen Temperatursensors 20 beschrieben, bezüglich einer Überschreitung zumindest einer weiteren Grenztemperatur überwacht. Wie diese Überwachung erfolgen kann bzw. welche Maßnahmen bzw. Gegenmaßnahmen aus den Ergebnissen der Überwachung abgeleitet werden, ist den vorhergehenden Beschreibungsteilen zu entnehmen. Aus Effizienzgründen wird auf eine Wiederholung an dieser Stelle verzichtet.

Zweckmäßig ist es auch, die Temperatur im Inneren des Gehäuses 2 mit mehreren Temperatursensoren 20, 35, 36 an unterschiedlichen Messpositionen fortwährend zu erfassen. Durch diese Maßnahme ist es insbesondere möglich, die unterschiedlichen Temperaturen in verschiedenen Bereichen im Inneren des Gehäuses 2 unabhängig voneinander zu erfassen und auszuwerten.

Wie in Fig. 3 ersichtlich, ist ein weiterer Temperatursensor 36 zur fortwährenden Erfassung eines weiteren Temperaturwerts an einem Netzteil 37 der Ladeanschlussvorrichtung 1 angebracht. Dieses Netzteil 37 ist auf der Leiterplatte 12 montiert und versorgt zumindest den Großteil der elektrotechnischen bzw. elektronischen Komponenten 11 der Ladeanschlussvorrichtung 1 mit elektrischer Energie. Wird nun mit dem weiteren Temperatursensor 36 eine Überschreitung einer weiteren Grenztemperatur festgestellt, so wird der Ladevorgang beendet und die Ladeanschlussvorrichtung 1 durch Abschalten des Netzteils 37 stillgelegt. Diese Temperaturüberwachung wirkt insbesondere unabhängig von der Temperaturüberwachung mittels der anderen Temperatursensoren 20, 34, 35.

Zweckmäßigerweise realisiert eine der elektrotechnischen bzw. elektronischen Komponenten 11 oder eine Komponente der Zentralsteuereinheit 19 der Ladeanschlussvorrichtung 1 ein elektronisches Speicherelement, in welchem jede Überschreitung und/oder jede darauffolgende Unterschreitung einer Grenztemperatur 21, 23, 27, bevorzugt zusammen mit anderen Betriebsereignissen der Ladeanschlussvorrichtung 1 und insbesondere mit einem absoluten oder relativen Zeitstempel versehen, protokolliert bzw. abgespeichert werden kann.

Der Ordnung halber sei abschließend darauf hingewiesen, dass zum besseren Verständnis des Aufbaus der Ladeanschlussvorrichtung 1 diese bzw. deren Bestandteile teilweise unmaßstäblich und/oder vergrößert und/oder verkleinert dargestellt wurden.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

**Bezugszeichenaufstellung**

| | | | |
|---|---|---|---|
| 1 | Ladeanschlussvorrichtung | 36 | Temperatursensor |
| 2 | Gehäuse | 37 | Netzteil |
| 3 | Vorderer Gehäuseteil | 38 | Ladekabelhalterung |
| 4 | Hinterer Gehäuseteil | | |
| 5-5^{IV} | Weitere Gehäuseteile | | |
| | | | |
| 6 | Erste Schnittstelle | | |
| 7 | Zweite Schnittstelle | | |
| 8 | Steckbuchse | | |
| 9 | Zweite Schnittstelle | | |
| 10 | Ladekabelabgang | | |
| | | | |
| 11 | Elektrotechnische bzw. elektronische Komponenten | | |
| 12 | Leiterplatte | | |
| 13 | Anschlussklemmen | | |
| 14 | Anschlussklemmen | | |
| 15 | Schütz | | |
| | | | |
| 16 | Fehlerstromschutzschalter | | |
| 17 | Formteil | | |
| 18 | Lüftungsdurchbrüche | | |
| 19 | Zentralsteuereinheit | | |
| 20 | Temperatursensor | | |
| | | | |
| 21 | Erste Grenztemperatur | | |
| 22 | Erste Zeitspanne | | |
| 23 | Zweite Grenztemperatur | | |
| 24 | Zweite Zeitspanne | | |
| 25 | Toleranzwert | | |
| | | | |
| 26 | Dritte Zeitspanne | | |
| 27 | Dritte Grenztemperatur | | |
| 28 | Kommunikationsschnittstelle | | |
| 29 | Ausgabeelement | | |
| 30 | Leuchtmittel | | |
| | | | |
| 31 | Anzeigeabschnitt | | |
| 32 | Lüftungseinheit | | |
| 33 | Lüftungsgitter | | |
| 34 | Temperatursensor | | |
| 35 | Temperatursensor | | |

## Patentansprüche

1. Verfahren zum Betreiben einer Ladeanschlussvorrichtung (1) für Elektrofahrzeuge, wobei die Ladeanschlussvorrichtung (1) zumindest eine erste Schnittstelle (6) zur Entnahme von elektrischer Energie aus einem ortsfesten Stromversorgungsnetz, zumindest eine zweite Schnittstelle (7, 9) zur gesteuerten Abgabe von elektrischer Energie an ein Elektrofahrzeug und ein Gehäuse (2) umfasst, welches Gehäuse (2) eine Mehrzahl von elektrotechnischen bzw. elektronischen Komponenten (11) umschließt und mittels welcher elektrotechnischen bzw. elektronischen Komponenten (11) ein Ladevorgang des Elektrofahrzeugs gesteuert und überwacht wird, wobei mit zumindest einem Temperatursensor (20) zumindest ein Temperaturwert im Inneren des Gehäuses (2) fortwährend erfasst wird, und wobei bei einer Überschreitung einer ersten Grenztemperatur (21) des zumindest einen Temperaturwerts der maximal zulässige Ladestrom von einem vorbestehenden Ausgangswert auf einen bestimmten und gegenüber dem Ausgangswert reduzierten Wert größer null gesetzt wird, **dadurch gekennzeichnet, dass** nach Ablauf einer festgelegten ersten Zeitspanne (22) mit einer ununterbrochenen Überschreitung der ersten Grenztemperatur (21) der Ladevorgang abgebrochen wird, und dass mit jeder Reduktion des maximal zulässigen Ladestroms jeweils der Beginn einer zweiten Zeitspanne (24) festgelegt ist und bei Ablauf der zweiten Zeitspanne (24) festgestellt wird, ob eine Überschreitung der ersten Grenztemperatur (21) vorliegt, und dass beim Vorliegen einer solchen Überschreitung der maximal zulässige Ladestrom weiter reduziert wird.

2. Verfahren nach Anspruch 1, **dadurch gekennzeichnet, dass** bei einer Überschreitung einer gegenüber der ersten Grenztemperatur (21) erhöhten, zweiten Grenztemperatur (23) des zumindest einen Temperaturwerts der Ladevorgang abgebrochen wird.

3. Verfahren nach Anspruch 1 oder 2, **dadurch gekennzeichnet, dass** eine Reduktion des maximal zulässigen Ladestroms oder ein Abbruch des Ladevorgangs wieder rückgängig gemacht wird, sobald die jeweilige Grenztemperatur (21, 23), deren Überschreitung diese Reduktion oder diesen Abbruch ausgelöst hatte, um einen bestimmten Toleranzwert (25) oder eine festgelegte dritte Zeitspanne (26) lang unterschritten wird.

4. Verfahren nach Anspruch 3, **dadurch gekennzeichnet, dass** nach einer Überschreitung einer dritten Grenztemperatur (27) des zumindest einen Temperaturwerts, welche dritte Grenztemperatur (27) erheblich, insbesondere um zumindest 20 °C, über der ersten Grenztemperatur (21) sowie über der gegebenenfalls zweiten Grenztemperatur (23) liegt, erst eine bewusste Bedienhandlung, insbesondere eine Fehlerquittierung, durch eine Bedienperson der Ladeanschlussvorrichtung (1) vorgenommen werden muss, bevor der Abbruch des Ladevorgangs gegebenenfalls wieder rückgängig gemacht wird.

5. Verfahren nach einem der vorhergehenden Ansprüche, **dadurch gekennzeichnet, dass** der jeweilige neue, maximal zulässige Ladestrom an eine Ladevorrichtung des Elektrofahrzeugs kommuniziert wird und die Ladevorrichtung den Ladevorgang entsprechend diesem neuen, maximal zulässigen Ladestrom regelt oder begrenzt.

6. Verfahren nach einem der vorhergehenden Ansprüche, **dadurch gekennzeichnet, dass** der zumindest eine Temperatursensor (20) den zumindest einen Temperaturwert im Inneren des Gehäuses (2) im Bereich einer Leiterplatte (12) fortwährend erfasst, welche Leiterplatte (12) zumindest einen Großteil der elektrotechnischen bzw. elektronischen Komponenten (11) der Ladeanschlussvorrichtung (1) trägt, und wobei der zumindest eine Temperatursensor (20) bevorzugt neben einer Zentralsteuereinheit (19) der Ladeanschlussvorrichtung (1) positioniert ist, welche Zentralsteuereinheit (19) die anderen elektrotechnischen bzw. elektronischen Komponenten (11) steuert bzw. mit diesen kommuniziert.

7. Verfahren nach einem der vorhergehenden Ansprüche, **dadurch gekennzeichnet, dass** eine Reduktion des maximal zulässigen Ladestroms oder ein Abbruch des Ladevorgangs an eine Bedienperson der Ladeanschlussvorrichtung (1) auf akustischem, visuellem und/oder informationstechnischem Weg signalisiert wird.

8. Verfahren nach einem der vorhergehenden Ansprüche, **dadurch gekennzeichnet, dass** die jeweilige Grenztemperatur (21, 23, 27) des zumindest einen Temperaturwerts mittels einer oder mehrerer Referenzmessungen derart ermittelt wird, dass unterhalb der jeweiligen Grenztemperatur (21, 23, 27) die zulässigen maximalen Betriebstemperaturen ausgewählter elektrotechnischer und elektronischer Komponenten (11) der Ladeanschlussvorrichtung (1) nicht überschritten werden.

9. Verfahren nach einem der vorhergehenden Ansprüche, **dadurch gekennzeichnet, dass** der mit dem zumindest einen Temperatursensor (20) fortwährend erfasste, zumindest eine Temperaturwert einer Trendanalyse unterzogen wird, sodass eine frühzeitige Reduktion des maximal zulässigen Ladestroms bzw. ein frühzeitiger Abbruch des Ladevorgangs bei einem entsprechenden Ergebnis der Trendanalyse durchgeführt werden kann, und dass eine Reduktion des maximal zulässigen Ladestroms bzw. ein Abbruch des Ladevorgangs bei einem entsprechenden Ergebnis der Trendanalyse unterbunden oder frühzeitig rückgängig gemacht werden kann.

10. Verfahren nach einem der vorhergehenden Ansprüche, **dadurch gekennzeichnet, dass** entsprechend dem aktuellen oder gegebenenfalls vorhergesagten Ausmaß der Änderungsrate, d.h. der Geschwindigkeit des Temperaturanstiegs bzw. der Temperaturabsenkung, des zumindest einen Temperaturwerts im Bereich der ersten Grenztemperatur (21) das Ausmaß der Reduktion bzw. gegebenenfalls der Erhöhung des maximal zulässigen Ladestroms ermittelt und festgelegt wird.

11. Verfahren nach einem der vorhergehenden Ansprüche, **dadurch gekennzeichnet, dass** bei einer Reduktion des maximal zulässigen Ladestroms, bei einem Abbruch des Ladevorgangs und/oder gegebenenfalls bei einem entsprechenden Ergebnis der Trendanalyse des zumindest einen Temperaturwerts eine Lüftungseinheit (32) der Ladeanschlussvorrichtung (1) aktiviert wird.

12. Verfahren nach einem der vorhergehenden Ansprüche, **dadurch gekennzeichnet, dass** mit zumindest einem weiteren Temperatursensor (34) zumindest ein weiterer Temperaturwert an oder in der zumindest einen, zweiten Schnittstelle (7) der Ladeanschlussvorrichtung (1) fortwährend erfasst wird und dieser zumindest eine weitere Temperaturwert bezüglich einer Überschreitung zumindest einer weiteren Grenztemperatur überwacht wird.

13. Verfahren nach einem der vorhergehenden Ansprüche, **dadurch gekennzeichnet, dass** mit mehreren Temperatursensoren (20, 35, 36) mehrere Temperaturwerte, bevorzugt an unterschiedlichen Messpositionen, im Inneren des Gehäuses (2) fortwährend erfasst werden.

14. Verfahren nach Anspruch 13, **dadurch gekennzeichnet, dass** mit einem weiteren Temperatursensor (36) ein weiterer Temperaturwert an bzw. in einem Netzteil (37) fortwährend erfasst wird, welches Netzteil (37) zumindest den Großteil der elektrotechnischen bzw. elektronischen Komponenten (11) der Ladeanschlussvorrichtung (1) mit elektrischer Energie versorgt, und wobei bei einer Überschreitung einer weiteren Grenztemperatur dieses weiteren Temperaturwerts der Ladevorgang beendet und die Ladeanschlussvorrichtung (1) durch Abschalten des Netzteils (37) stillgelegt wird.

15. Verfahren nach einem der vorhergehenden Ansprüche, **dadurch gekennzeichnet, dass** jede Überschreitung und/oder jede darauffolgende Unterschreitung einer Grenztemperatur (21, 23, 27), bevorzugt zusammen mit anderen Betriebsereignissen und insbesondere mit einem absoluten oder relativen Zeitstempel versehen, protokolliert wird.

## Claims

1. A method for operating a charging connection device (1) for electric vehicles, wherein the charging connection device (1) comprises at least a first interface (6) for drawing electrical energy from a stationary power supply network, at least a second interface (7, 9) for discharging electrical energy to an electric vehicle in a controlled manner and a housing (2), said housing (2) enclosing a plurality of electrical/electronic components (11) and a charging operation of the electric vehicle being controlled and monitored by means of the electrical/electronic components (11), wherein at least one temperature value in the interior of the housing (2) is continuously detected by means of at least one temperature sensor (20), and wherein when a first threshold temperature (21) of the at least one temperature value is exceeded, the maximum permissible charging current is reset from a previously existing initial value to a specific value that is greater than zero but lower than the initial value, **characterized in that** the charging operation is interrupted when a fixed first interval (22) during which the first threshold temperature (21) has been continuously exceeded has elapsed, and **in that** with every reduction of the maximum permissible charging current, the start of a second interval (24) is respectively set and when the second interval (24) has elapsed, it is ascertained whether the first threshold temperature (21) has been exceeded, and **in that** if it has been exceeded, the maximum permissible charging current is further reduced.

2. The method according to claim 1, **characterized in that** the charging operation is interrupted if a second threshold temperature (23) of the at least one temperature value higher than the first threshold temperature (21) has been exceeded.

3. The method according to claim 1 or 2, **characterized in that** a reduction of the maximum permissible charging current or an interruption of the charging operation is reversed again as soon as there is a drop below the respective threshold temperature (21, 23) which, having been exceeded triggered this reduction or this interruption, by a specific tolerance value (25) or for a fixed third interval (26).

4. The method according to claim 3, **characterized in that** when a third threshold temperature (27) of the at least one temperature value is exceeded, with the third threshold temperature (27) lying significantly above the first threshold temperature (21), in particular by at least 20 °C, as well as above the potential second threshold temperature (23), a conscious control action, in particular an error acknowledgment, has to be undertaken by an operator of the charging connection device (1) first of all before the interruption of the charging operation is reversed again where appropriate.

5. The method according to one of the preceding claims, **characterized in that** the respective new, maximum permissible charging current is communicated to a charging device of the electric vehicle and the charging device controls or limits the charging operation in accordance with this new, maximum permissible charging current.

6. The method according to one of the preceding claims, **characterized in that** the at least one temperature sensor (20) continuously detects the at least one temperature value in the interior of the housing (2) in the region of a circuit board (12), said circuit board (12) supporting at least a majority of the electrical/electronic components (11) of the charging connection device (1), and wherein the at least one temperature sensor (20) is preferably positioned adjacent to a central control unit (19) of the charging connection device (1), said central control unit (19) controlling the other electrical/electronic components (11) and communicating with them.

7. The method according to one of the preceding claims, **characterized in that** a reduction of the maximum permissible charging current or an interruption of the charging operation is signaled to an operator of the charging connection device (1) acoustically, visually and/or by information technology.

8. The method according to one of the preceding claims, **characterized in that** the respective threshold temperature (21, 23, 27) of the at least one temperature value is determined by means of one or more reference measurements such that below the respective threshold temperature (21, 23, 27), the permissible maximum operating temperatures of selected electrical and electronic components (11) of the charging connection device (1) are not exceeded.

9. The method according to one of the preceding claims, **characterized in that** the at least one temperature value continuously detected by the at least one temperature sensor (20) is subjected to a trend analysis such that the maximum permissible charging current can be reduced at an early stage or the charging operation can be interrupted at an early stage in the event of a corresponding result of the trend analysis, and such that a reduction of the maximum permissible charging current or an interruption of the charging operation can be prevented or reversed at an early stage in the event of a corresponding result of the trend analysis.

10. The method according to one of the preceding claims, **characterized in that** the amount by which the maximum permissible charging current is decreased or optionally increased is determined and fixed in accordance with the current or potentially predicted degree of the rate of change, i.e. the speed of the temperature increase or temperature decrease of the at least one temperature value in the vicinity of the first threshold temperature (21).

11. The method according to one of the preceding claims, **characterized in that** a venting unit (32) of the charging connection device (1) is activated in the event of a reduction of the maximum permissible charging current, in the event of an interruption of the charging operation and/or optionally in the event of a corresponding result of the trend analysis of the at least one temperature value.

12. The method according to one of the preceding claims, **characterized in that** at least one further temperature value is continuously detected at or in the at least one second interface (7) of the charging connection device (1) by at least one further temperature sensor (34) and this at least one further temperature value is monitored to detect if at least one further threshold temperature has been exceeded.

13. The method according to one of the preceding claims, **characterized in that** several temperature values are continuously detected by several temperature sensors (20, 35, 36) in the interior of the housing (2), preferably at different measuring positions.

14. The method according to claim 13, **characterized in that** a further temperature value is continuously detected by a further temperature sensor (36) on or in a power supply (37), said power supply (37) supplying at least the majority of the electrical/electronic components (11) of the charging connection device (1) with electrical energy, and wherein if a further threshold temperature of this further temperature value has been exceeded, the charging operation is terminated and the charging connection device (1) is deactivated by switching off the power supply (37).

15. The method according to one of the preceding claims, **characterized in that** a log is kept of every time a threshold temperature (21, 23, 27) has been exceeded and/or every time there has subsequently been a drop below it, preferably in conjunction with other operating events and in particular with an absolute or relative time stamp.

## Revendications

1. Procédé d'exploitation d'un dispositif de raccordement de charge (1) pour des véhicules électriques, le dispositif de raccordement de charge (1) comprenant au moins une première interface (6) pour le prélèvement d'énergie électrique à partir d'un réseau d'alimentation en électricité stationnaire, au moins une deuxième interface (7, 9) pour l'alimentation contrôlée en énergie électrique d'un véhicule électrique et d'un boîtier (2), ce boîtier (2) englobant une pluralité de composants électrotechniques ou électroniques (11) et un processus de charge du véhicule électrique étant contrôlé et surveillé au moyen de ces composants électrotechniques ou électroniques (11), moyennant quoi, avec au moins un capteur de température (20), au moins une valeur de température étant mesurée en continu à l'intérieur du boîtier (2), et moyennant quoi, lors d'un dépassement d'une première température limite (21) de l'au moins une valeur de température, le courant de charge maximal admissible étant réglé d'une valeur initiale pré-existante à une valeur déterminée et réduite par rapport à la valeur initiale supérieure à zéro, **caractérisé en ce que**, après l'écoulement d'une première période (22) déterminée, avec un dépassement ininterrompu de la première température limite (21), le processus de charge est interrompu et **en ce que**, avec chaque réduction du courant de charge maximal admissible, le début d'une deuxième période (24) est déterminé et, lorsque la deuxième période (24) est écoulée, il est déterminé si un dépassement de la première température limite (21) existe et **en ce que**, lors de l'existence d'un tel dépassement le courant de charge maximal admissible est encore réduit.

2. Procédé selon la revendication 1, **caractérisé en ce que**, lors d'un dépassement d'une deuxième température limite (23), augmentée par rapport à la première température limite (21), de l'au moins une valeur de température, le processus de charge est interrompu.

3. Procédé selon la revendication 1 ou 2, **caractérisé en ce qu'**une réduction du courant de charge maximal admissible ou une interruption du processus de charge est annulée dès que la température a diminué, d'une valeur de tolérance (25) déterminée ou pendant une troisième période (26) déterminée, en dessous de la température limite (21, 23) correspondante, dont le dépassement avait déclenché cette réduction ou cette interruption.

4. Procédé selon la revendication 3, **caractérisé en ce que**, après un dépassement d'une troisième température limite (27) de l'au moins une valeur de température, cette troisième température limite (27) se trouvant nettement, plus particulièrement d'au moins 20 °C, au-dessus de la première température limite (21), ainsi que, le cas échéant, au-dessus de la deuxième température limite (23), une action de commande consciente, plus particulièrement un acquittement d'erreur, ne doit être effectuée par un opérateur du dispositif de raccordement de charge (1), qu'avant que l'interruption du processus de charge ne soit annulé.

5. Procédé selon l'une des revendications précédentes, **caractérisé en ce que** le nouveau courant de charge maximal admissible est communiqué à un dispositif de charge du véhicule électrique, et le dispositif de charge régule ou limite le processus de charge en fonction de ce nouveau courant de charge maximal admissible.

6. Procédé selon l'une des revendications précédentes, **caractérisé en ce que** l'au moins un capteur de température (20) mesure en continu une valeur de température à l'intérieur du boîtier (2) au niveau d'un circuit imprimé (12), ce circuit imprimé (12) comportant au moins une majeure partie des composants électrotechniques ou électroniques (11) du dispositif de raccordement de charge (1) et l'au moins un capteur de température (20) étant positionné de préférence à proximité d'une unité de commande centrale (19) du dispositif de raccordement de charge (1), cette unité de commande centrale (19) contrôlant les autres composants électrotechniques ou électroniques (11) ou communiquant avec ceux-ci.

7. Procédé selon l'une des revendications précédentes, **caractérisé en ce qu'**une réduction du courant de charge maximal admissible ou une interruption du processus de charge est signalée à un opérateur du dispositif de raccordement de charge (1) de manière acoustique, visuelle et/ou informatique.

8. Procédé selon l'une des revendications précédentes, **caractérisé en ce que** la température limite (21, 23, 27) correspondante de l'au moins une valeur de température est déterminée au moyen d'une ou de plusieurs mesures de référence de façon à ce que, en dessous de la température limite (21, 23, 27), correspondante, les températures de fonctionnement maximales admissibles des composants électrotechniques et électroniques (11) sélectionnés du dispositif de raccordement de charge (1) ne soient pas dépassées.

9. Procédé selon l'une des revendications précédentes, **caractérisé en ce que** l'au moins une valeur de température mesurée en continue avec l'au moins un capteur de température (20) est soumise à une analyse de tendance de façon à ce qu'une réduction précoce du courant de charge maximal admissible ou une interruption précoce du processus de charge puisse être effectuée dans le cas d'un résultat correspondant de l'analyse de tendance, et à ce qu'une réduction du courant de charge maximal admissible ou une interruption du processus de charge puisse être inhibée ou annulée de manière précoce dans le cas d'un résultat correspondant de l'analyse de tendance.

10. Procédé selon l'une des revendications précédentes, **caractérisé en ce que**, en fonction de l'importance réelle ou, le cas échéant prédite, du taux de variation, c'est-à-dire de la vitesse de l'augmentation de la température ou de la baisse de température, de l'au moins une valeur de température au niveau de la première température limite (21), l'importance de la réduction ou, le cas échéant, de l'augmentation du courant de charge maximal admissible est déterminée ou fixée.

11. Procédé selon l'une des revendications précédentes, **caractérisé en ce que**, lors d'une réduction du courant de charge maximal admissible, dans le cas d'une interruption du processus de charge et/ou, le cas échéant, dans le cas d'un résultat correspondant de l'analyse de tendance de l'au moins une valeur de température, une unité ventilation (32) du dispositif de raccordement de charge (1) est activée.

12. Procédé selon l'une des revendications précédentes, **caractérisé en ce que**, avec au moins un autre capteur de température (34), au moins une autre valeur de température est mesurée en continu au niveau ou dans l'au moins une deuxième interface (7) du dispositif de raccordement de charge (1) et cette au moins une autre valeur de température est surveillée en ce qui concerne un dépassement d'au moins une autre température limite.

13. Procédé selon l'une des revendications précédentes, **caractérisé en ce que**, avec plusieurs capteurs de température (20, 35, 36), plusieurs valeurs de température sont mesurées en continu, de préférence au niveau de positions de mesure différentes, à l'intérieur du boîtier (2).

14. Procédé selon la revendication 13, **caractérisé en ce que**, avec un autre capteur de température (36), une autre valeur de température est mesurée en continu au niveau ou dans un bloc d'alimentation (37), ce bloc d'alimentation (37) alimentant au moins une grande partie des composants électrotechniques ou électroniques (11) du dispositif de raccordement de charge (1) en énergie électrique et moyennant quoi, lors d'un dépassement d'une autre température limite de cette autre valeur de température, le processus de charge est terminé et le dispositif de raccordement de charge (1) est arrêté par l'arrêt du bloc d'alimentation (37).

15. Procédé selon l'une des revendications précédentes, **caractérisé en ce que** chaque dépassement et/ou passage en dessous ultérieur d'une température limite (21, 23, 27), est consigné de préférence conjointement avec d'autres événements de fonctionnement et plus particulièrement avec un horodatage absolu ou relatif.
